# EUROPÄISCHE PATENTSCHRIFT

(11) **EP 0 554 518 B1**
(45) Veröffentlichungstag und Bekanntmachung des Hinweises auf die Patenterteilung: **10.07.1996**
(21) Anmeldenummer: 92118402.4
(22) Anmeldetag: 28.10.1992
(51) Int. Cl.: G01D 5/16, G01P 13/04

(54) **Positionsmesseinrichtung**
Position measuring device
Dispositif de mesure de position

(30) Priorität: 04.02.1992 DE 4203073
(43) Veröffentlichungstag der Anmeldung: 11.08.1993
(73) Patentinhaber: Dr. Johannes Heidenhain GmbH, D-83292 Traunreut (DE)
(72) Erfinder: Spies, Alfons, Dipl.-Ing., W-8221 Seebruck (DE); Metz, Gerald, Ing. (grad), W-8221 St. Georgen (DE)

(56) Entgegenhaltungen:
- EP-A- 0 112 463
- EP-A- 0 415 576
- US-A- 5 047 716
- MACHINE DESIGN Bd. 60, Nr. 17, 21. Juli 1988, CLEVELAND,OHIO,USA Seiten 77 - 83 , XP000022133 ALFONS ERNST 'Precise Positioning with Linear Encoders'

## Beschreibung

Die Erfindung betrifft eine magnetische Positionsmeßeinrichtung gemäß dem Oberbegriff der Ansprüche 1 und 2.

Eine derartige Positionsmeßeinrichtung wird insbesondere bei einer Bearbeitungsmaschine zur Messung der Relativlage eines Werkzeugs bezüglich eines zu bearbeitenden Werkstückes eingesetzt.

In der EP-B1-0 151 002 ist eine magnetische Positionsmeßeinrichtung zur Messung der Relativlage zweier zueinander beweglicher Objekte beschrieben, bei der eine Meßteilung in Meßrichtung alternierend magnetisch leitende und magnetisch nichtleitende Bereiche besitzt, die von einer einen Permanentmagneten aufweisenden Abtasteinheit gemäß Figur 19 mittels zweier Gruppen aus je vier magnetoresistiven Elementen zur Erzeugung von positionsabhängigen Ausgangssignalen abgetastet werden. Die vier magnetoresistiven Elemente jeder Gruppe sind jeweils in Form einer Reihenschaltung zu einer Halbbrückenschaltung verschaltet. Diese Meßeinrichtung weist jedoch den Nachteil auf, daß lediglich zwei Teilungsperioden der Meßteilung von den beiden Gruppen aus jeweils vier magnetoresistiven Elementen abgetastet werden, so daß die gewonnenen positionsabhängigen Ausgangssignale infolge von Teilungsungenauigkeiten der Meßteilung im allgemeinen keine optimalen Signalparameter (Amplituden, gegenseitige Phasenlage) aufweisen werden. Da die magnetoresistiven Elemente in Form einer Reihenschaltung zu zwei Halbbrückenschaltungen verschaltet sind, ist eine Erhöhung der Anzahl der magnetoresistiven Elemente jeder Gruppe zur Abtastung zusätzlicher Teilungsperioden der Meßteilung nicht ohne weiteres möglich, weil sonst der Brückenwiderstand der beiden Halbbrückenschaltungen zu groß würde; in diesem Falle müßte zur Einspeisung einer bestimmten Stromstärke eine hohe Spannung an die Halbbrückenschaltungen angelegt werden.

Aus der US-A 5 047 716 ist eine weitere Positionsmeßeinrichtung bekannt, bei der magnetoresistive Elemente in Brückenzweigen einer Brückenschaltung in Reihe geschaltet sind. Auch diese Positionsmeßeinrichtung weist die oben angeführten Nachteile einer Reihenschaltung auf.

Der Erfindung liegt die Aufgabe zugrunde, bei einer magnetischen Meßeinrichtung der genannten Gattung eine Anordnung und Verschaltung von magnetoresistiven Elementen anzugeben, die auf einfache Weise eine Gewinnung von positionsabhängigen Ausgangssignalen mit optimalen Signalparametern erlauben.

Die Aufgabe wird erfindungsgemäß durch die Merkmale des Anspruches 1 und des Anspruches 2 gelöst.

Die mit der Erfindung erzielten Vorteile bestehen insbesondere darin, daß die durch die vorgeschlagene Anordnung und Verschaltung der magnetoresistiven Elemente gewonnenen positionsabhängigen Ausgangssignale wegen ihrer optimalen Signalparameter einer nachfolgenden Interpolation mit hohem Unterteilungsgrad unterzogen werden können, so daß sich die Meßgenauigkeit und die Meßauflösung weiter erhöhen; zudem kann wegen des relativ niedrigen Brückenwiderstandes der Halbbrückenschaltungen oder der Vollbrückenschaltungen mit einer Reihen-Parallel-Schaltung der magnetoresistiven Elemente die zur Einspeisung einer bestimmten Stromstärke erforderliche Spannung in einem niedrigeren Bereich liegen.

Eine vorteilhafte Ausbildung der Erfindung entnimmt man den abhängigen Ansprüchen.

Ausführungsbeispiele der Erfindung werden anhand der Zeichnung näher erläutert.

Es zeigen
- Figur 1: eine Längsansicht einer ersten Positionsmeßeinrichtung,
- Figur 2a-c: eine erste Anordnung und Verschaltung von magnetoresistiven Elementen zu zwei Halbbrückenschaltungen,
- Figur 3a-c: eine zweite Anordnung und Verschaltung von magnetoresistiven Elementen zu zwei Vollbrückenschaltungen,
- Figur 4a-c: eine dritte Anordnung und Verschaltung von magnetoresistiven Elementen zu zwei Vollbrückenschaltungen,
- Figur 5: eine Längsansicht einer zweiten Positionsmeßeinrichtung und
- Figur 6: eine Längsansicht einer dritten Positionsmeßeinrichtung.

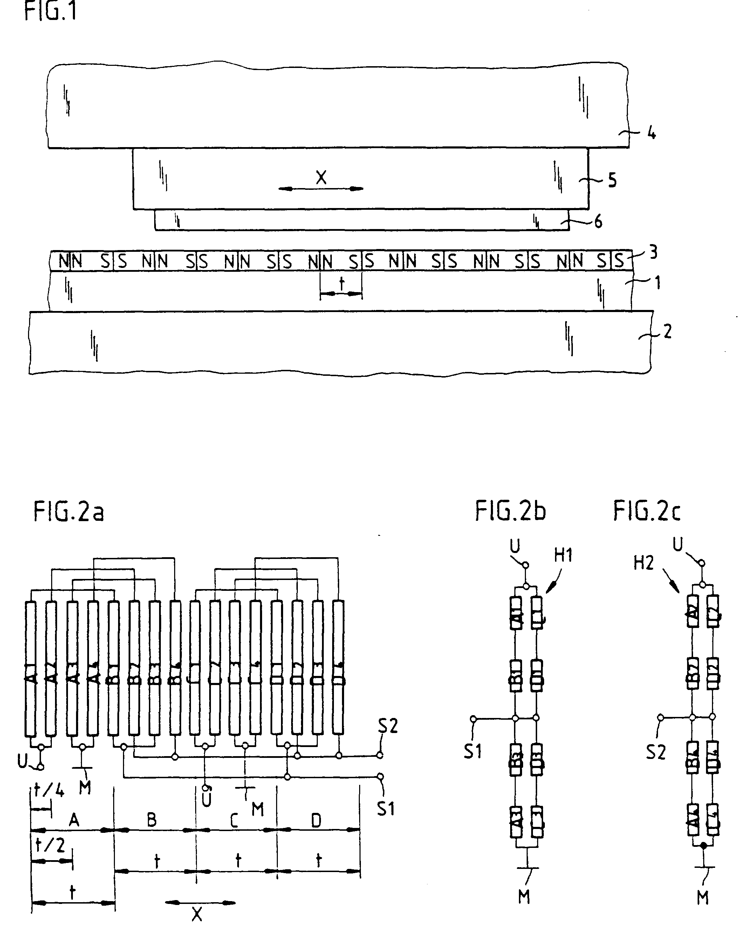

In Figur 1 ist schematisch in einer Längsansicht eine erste Positionsmeßeinrichtung gezeigt, bei der eine Maßverkörperung 1 aus einem magnetisierbaren Material in beliebiger Weise an einem ersten Objekt 2 befestigt ist. Die Maßverkörperung 1 weist auf einer Oberfläche eine periodische Meßteilung 3 mit in Meßrichtung X alternierend gegenpolig magnetisierten Bereichen NS auf, an deren Bereichsgrenzen zwei Nordpole NN bzw. zwei Südpole SS aneinandergrenzen. Die Meßteilung 3 besitzt eine Teilungsperiode t, die durch den Polabstand jedes Bereichs NS definiert ist. Mit einem zweiten Objekt 4 ist eine Abtasteinheit 5 verbunden, die die Meßteilung 3 der Maßverkörperung 1 zur Gewinnung von Positionsmeßwerten für die Relativlage der beiden Objekte 2, 4 abtastet. Diese beiden Objekte 2, 4 können durch zwei Maschinenteile einer nicht dargestellten Bearbeitungsmaschine gebildet sein. Die Abtasteinheit 5 ist mit einer Abtastplatte 6 versehen, auf deren freien Oberfläche vier Gruppen A, B, C, D aus je vier magnetoresistiven Elementen An, Bn, Cn, Dn (n=1,2,3,4) angeordnet sind.

Nach Figur 2a erstrecken sich diese streifenförmigen magnetoresistiven Elemente An - Dn senkrecht zur Meßrichtung X und sind in Meßrichtung X parallel zueinander mit einem jeweiligen gegenseitigen Abstand t/4 angeordnet; jede Gruppe A-D aus vier magnetoresistiven Elementen An - Dn erstreckt sich in Meßrichtung X somit über eine Teilungsperiode t der Meßteilung 3.

Gemäß den Figuren 2b und 2c werden die magnetoresistiven Elemente An - Dn in Form einer Reihen-Parallel-Schaltung zu zwei Halbbrückenschaltungen H1, H2 verschaltet, die jeweils mit einem Pol an einer Spannung U und mit dem anderen Pol an Masse M anliegen. Bei der Meßbewegung der Abtasteinheit 5 bezüglich der Meßteilung 3 stehen am Mittelabgriff der ersten Halbbrückenschaltung H1 ein erstes periodisches Ausgangssignal S1 mit der Phasenlage 0° und am Mittelabgriff der zweiten Halbbrückenschaltung H2 ein zweites periodisches Ausgangssignal S2 mit der Phasenlage 90° an, deren Signalperioden der Teilungsperiode t der Meßteilung 3 entsprechen; die Phasendifferenz von 90° zwischen den beiden periodischen Ausgangssignalen S1, S2 ermöglicht die Diskriminierung der Meßrichtung X. Die beiden periodischen Ausgangssignale S1, S2 werden einer nicht gezeigten Auswerteeinrichtung mit einer Interpolationseinheit zur Gewinnung von Positionsmeßwerten zugeführt. Da die beiden Ausgangssignale S1, S2 wegen der sogenannten Einfeldabtastung über vier Teilungsperioden t der Meßteilung 3 optimale Signalparameter (hohe Nullpunktsstabilität, gleiche Amplituden und eine konstante gegenseitige Phasendifferenz) besitzen, können sie in der Interpolationseinheit mit einem hohen Unterteilungsgrad unterteilt werden, so daß eine höhere Meßgenauigkeit und Meßauflösung auch bei Teilungsungenauigkeiten der Meßteilung 3 erzielt werden.

Die magnetoresistiven Elemente A₁, B₁, C₁, D₁ jeder Gruppe A-D des oberen Brückenzweiges der ersten Halbbrückenschaltung H1 sind gegenüber den entsprechenden magnetoresistiven Elementen A₃, B₃, C₃, D₃ ihrer Gruppe A-D des unteren Brückenzweiges um den Betrag t/2 versetzt; desgleichen sind die magnetoresistiven Elemente A₂, B₂, C₂, D₂ jeder Gruppe A-D des oberen Brückenzweiges der zweiten Halbbrückenschaltung H2 gegenüber den entsprechenden magnetoresistiven Elementen A₄, B₄, C₄, D₄ ihrer Gruppe A-D des unteren Brückenzweiges um den Betrag t/2 versetzt.

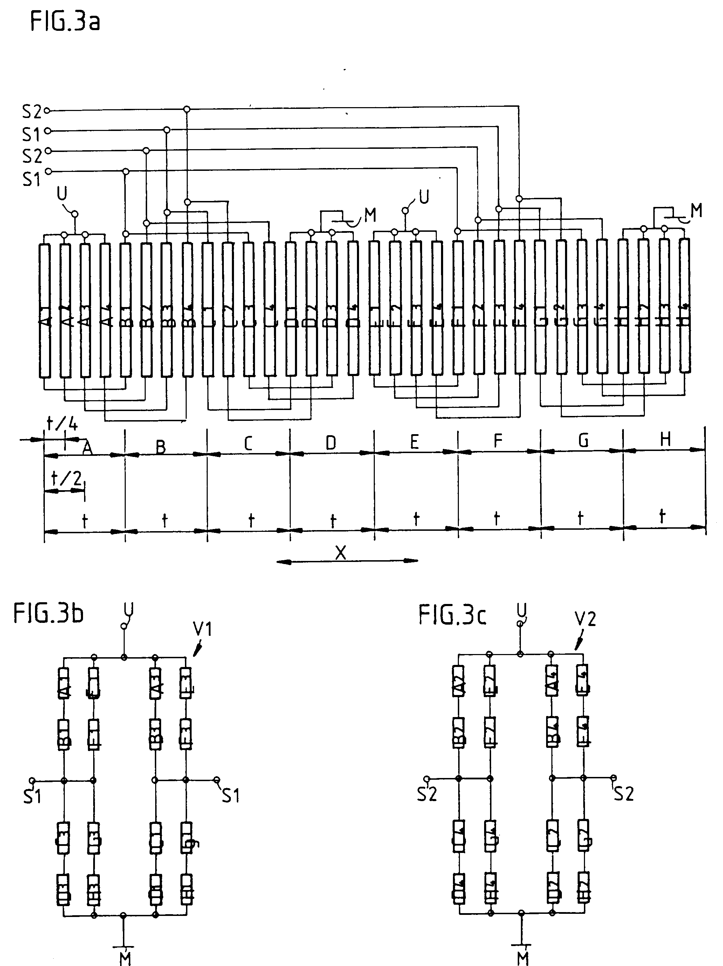

Gemäß Figur 3a sind auf der Abtastplatte 6 der Abtasteinheit 5 acht Gruppen A - H aus jeweils vier magnetoresistiven Elementen An - Hn (n = 1, 2, 3, 4) angeordnet, die in Form einer Reihen-Parallelschaltung zu zwei Vollbrückenschaltungen V1, V2 (Figuren 3b und 3c) verschaltet sind, die jeweils mit einem Pol an einer Spannung U und mit dem anderen Pol an Masse M anliegen. Bei der Meßbewegung der Abtasteinheit 5 bezüglich der Meßteilung 3 stehen an den beiden Mittelabgriffen der ersten Vollbrückenschaltung V1 ein erstes periodisches Ausgangssignal S1 mit der Phasenlage 0° und an den beiden Mittelabgriffen der zweiten Vollbrückenschaltung V2 ein zweites periodisches Ausgangssignal S2 mit der Phasenlage 90° an, deren Signalperioden der Teilungsperiode t der Meßteilung 3 entsprechen; die Phasendifferenz von 90° zwischen den beiden periodischen Ausgangssignalen S1, S2 erlaubt die Diskriminierung der Meßrichtung X. Diese beiden periodischen Ausgangssignale S1, S2 werden ebenfalls der Auswerteeinrichtung mit der Interpolationseinheit zur Gewinnung von Positionsmeßwerten zugeführt. Da die beiden Ausgangssignale S1, S2 wegen der sogenannten Einfeldabtastung über acht Teilungsperioden t der Meßteilung 3 optimale Signalparameter (hohe Nullpunktsstabilität, gleiche Amplituden und eine konstante gegenseitige Phasendifferenz) besitzen, können sie in der Interpolationseinheit mit einem hohen Unterteilungsgrad unterteilt werden, so daß eine höhere Meßgenauigkeit und Meßauflösung auch bei Teilungsungenauigkeiten der Meßteilung 3 erzielt werden.

Die magnetoresistiven Elemente A₁, B₁, C₃, D₃, E₁, F₁, G₃, H₃ jeder Gruppe A-H des linken Brückenzweiges der ersten Vollbrückenschaltung V1 sind gegenüber den entsprechenden magnetoresistiven Elementen A₃, B₃, C₁, D₁, E₃, F₃, G₁, H₁ ihrer Gruppe A-H des rechten Brückenzweiges um den Betrag t/2 versetzt; desgleichen sind die magnetoresistiven Elemente A₂, B₂, C₄, D₄, E₂, F₂, G₄, H₄ jeder Gruppe A-H des linken Brückenzweiges der zweiten Vollbrückenschaltung V2 gegenüber den entsprechenden magnetoresistiven Elementen A₄, B₄, C₂, D₂, E₄, F₄, G₂, H₂ ihrer Gruppe A-H des rechten Brückenzweiges um den Betrag t/2 versetzt.

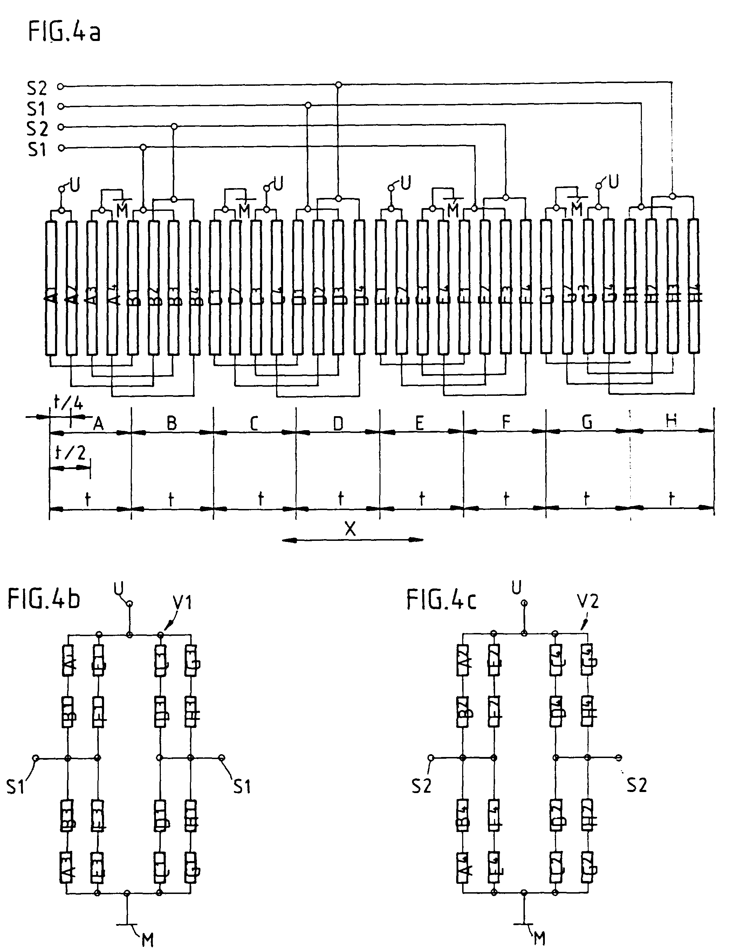

Gemäß Figur 4a sind auf der Abtastplatte 6 der Abtasteinheit 5 ebenfalls acht Gruppen A-H aus jeweils vier magnetoresistiven Elementen An-Hn (n=1, 2,3,4) angeordnet, die in Form einer Reihen-Parallelschaltung zu zwei Vollbrückenschaltungen V1, V2 (Figuren 4b und 4c) verschaltet sind, die jeweils mit einem Pol an einer Spannung U und mit dem anderen Pol an Masse M anliegen. Bei der Meßbewegung der Abtasteinheit 5 bezüglich der Meßteilung 3 stehen an den beiden Mittelabgriffen der ersten Vollbrückenschaltung V1 ein erstes periodisches Ausgangssignal S1 mit der Phasenlage 0° und an den beiden Mittelabgriffen der zweiten Vollbrückenschaltung V2 ein zweites periodisches Ausgangssignal S2 mit der Phasenlage 90° an, deren Signalperioden der Teilungsperiode t der Meßteilung 3 entsprechen; die Phasendifferenz von 90° zwischen den beiden periodischen Ausgangssignalen S1, S2 erlaubt die Diskriminierung der Meßrichtung X. Diese beiden periodischen Ausgangssignale S1, S2 werden ebenfalls der Auswerteeinrichtung mit der Interpolationseinheit zur Gewinnung von Positionsmeßwerten zugeführt. Da die beiden Ausgangssignale S1, S2 wegen der sogenannten Einfeldabtastung über acht Teilungsperioden t der Meßteilung 3 optimale Signalparameter (hohe Nullpunktsstabilität, gleiche Amplituden und eine konstante gegenseitige Phasendifferenz) besitzen, können sie in der Interpolationseinheit mit einem hohen Unterteilungsgrad unterteilt werden, so daß eine höhere Meßgenauigkeit und Meßauflösung auch bei Teilungsungenauigkeiten der Meßteilung 3 erzielt werden.

Die magnetoresistiven Elemente A₁, B₁, C₃, D₃, E₁, F₁, G₃, H₃ jeder Gruppe A-H des oberen Brückenzweiges der ersten Vollbrückenschaltung V1 sind gegenüber den entsprechenden magnetoresistiven Elementen A₃, B₃, C₁, D₁, E₃, F₃, G₁, H₁ ihrer Gruppe A-H des unteren Brückenzweiges um den Betrag t/2 versetzt; desgleichen sind die magnetoresistiven Elemente A₂, B₂, C₄, D₄, E₂, F₂, G₄, H₄ jeder Gruppe A-H des oberen Brückenzweiges der zweiten Vollbrückenschaltung V2 gegenüber den entsprechenden magnetoresistiven Elementen A₄, B₄, C₂, D₂, E₄, F₄, G₂, H₂ ihrer Gruppe A-H des unteren Brückenzweiges um den Betrag t/2 versetzt.

Die Einfeldabtastung über wenigstens vier Teilungsperioden t der Meßteilung 3 bewirkt, daß Teilungsungenauigkeiten, die kleiner als die gesamte Abtastlänge sind, ganz oder zumindest teilweise herausgefiltert werden. Eine Abtastlänge von m · 2t (m=2,3,...) ermöglicht zudem das vollständige Ausfiltern von Fehlern mit einer Periodenlänge von 2t, die auftreten, wenn z.B. dem wechselnden Magnetfeld der Meßteilung 3 ein Gleichfeld überlagert ist, so daß es sich zur einen Magnetflußrichtung addiert und zur anderen Magnetflußrichtung subtrahiert, oder wenn die magnetoresistiven Elemente An-Hn auf eine Magnetflußrichtung empfindlicher reagieren.

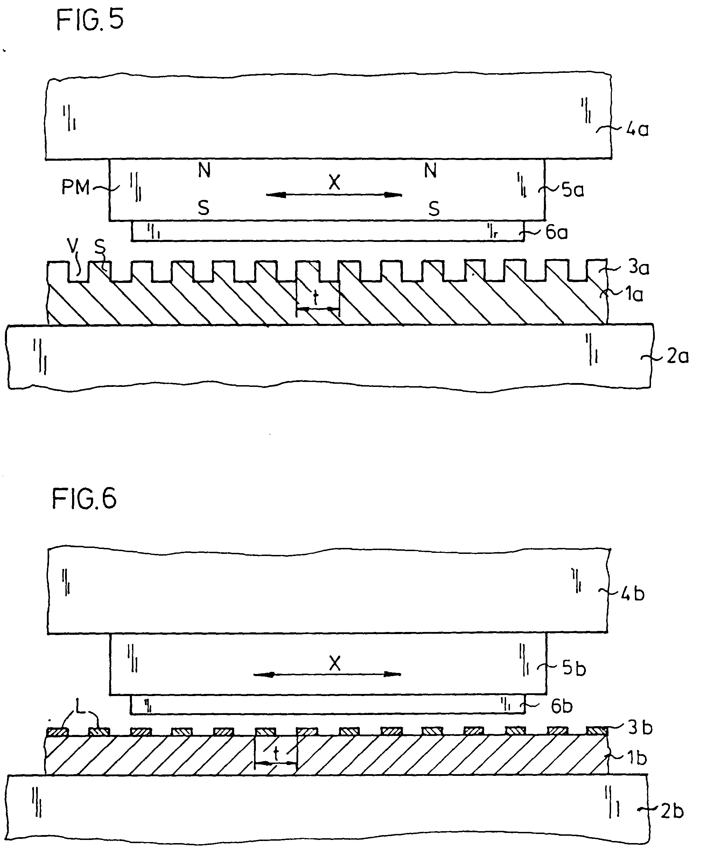

In Figur 5 ist schematisch in einer Längsansicht eine zweite Positionsmeßeinrichtung gezeigt, bei der eine Maßverkörperung 1a aus magnetisch leitendem Material in beliebiger Weise an einem ersten Objekt 2a befestigt ist. Die Maßverkörperung 1a weist auf einer Oberfläche eine periodische Meßteilung 3a mit in Meßrichtung X alternierend aufeinander folgenden Stegen S und Vertiefungen V mit gleichen Breiten auf; die Meßteilung 3a besitzt eine Teilungsperiode t, die durch einen Steg S und eine benachbarte Vertiefung V definiert ist. Mit einem zweiten Objekt 4a ist eine Abtasteinheit 5a verbunden, die die Meßteilung 3a der Maßverkörperung 1a zur Gewinnung von Positionsmeßwerten für die Relativlage der beiden Objekte 2a, 4a abtastet. Die Abtasteinheit 5a ist mit einem Permanentmagneten PM sowie mit einer Abtastplatte 6a versehen, auf deren freien Oberfläche die Gruppen A-D bzw. A-H aus magnetoresistiven Elementen An-Dn bzw. An-Hn angeordnet sind.

In Figur 6 ist schematisch in einer Längsansicht eine dritte Positionsmeßeinrichtung gezeigt, bei der eine Maßverkörperung 1b aus einem isolierenden Material in beliebiger Weise an einem ersten Objekt 2b befestigt ist. Die Maßverkörperung 1b weist auf einer Oberfläche eine periodische Meßteilung 3b mit einer mäanderförmigen Leiterbahn auf, deren in Meßrichtung X benachbarten äquidistanten Leiter L entgegengesetzt von einem Strom durchflossen sind; die Meßteilung 3b besitzt eine Teilungsperiode t, die durch den Abstand zweier benachbarter Leiter L definiert ist. Mit einem zweiten Objekt 4b ist eine Abtasteinheit 5b verbunden, die die Meßteilung 3b der Maßverkörperung 1b zur Gewinnung von Positionsmeßwerten für die Relativlage der beiden Objekte 2b, 4b abtastet. Die Abtasteinheit 5b ist mit einer Abtastplatte 6b versehen, auf deren freien Oberflächen die Gruppen A-D bzw. A-H aus magnetoresistiven Elementen An-Dn bzw. An-Hn angeordnet sind.

Jede Gruppe A-H kann auch mehr als vier magnetoresistive Elemente An-Hn (n=1,2,3,4,...) aufweisen, um Oberwellen höherer Ordnungszahl als 2 herauszufiltern.

## Patentansprüche

1. Positionsmeßeinrichtung zur Messung der Relativlage zweier zueinander beweglicher Objekte (2, 2a, 2b; 4, 4a, 4b) bei der eine periodische Meßteilung (3, 3a, 3b) in Meßrichtung (X) von einer Abtasteinheit (5, 5a, 5b) mittels magnetoresistiver Elemente (An-Hn) zur Erzeugung von positionsabhängigen Ausgangssignalen (S1, S2) abgetastet wird, aus denen in einer Auswerteeinrichtung Positionsmeßwerte gebildet werden, wobei die magnetoresistiven Elemente (An-Hn) zu Brükkenschaltungen (H1, H2, V1, V2) verschaltet sind, indem jeweils ein Brückenzweig aus einer Reihenschaltung von mehreren magnetoresistiven Elementen (An-Hn) besteht, dadurch gekennzeichnet, daß die Abtasteinheit (5) wenigstens vier Gruppen (A-H) von magnetoresistiven Elementen (An-Hn) aufweist, und sich jede Gruppe (A-H) aus mindestens vier voneinander gleichbeabstandeten magnetoresistiven Elementen (An-Hn) über eine Teilungsperiode (t) der Meßteilung (3) erstreckt, und daß die Brückenschaltungen als Halbbrückenschaltungen (H1, H2) ausgebildet sind, wobei innerhalb eines Brückenzweiges mehrere magnetoresistive Elemente (An-Hn) in Reihe geschaltet sind und diese Reihenschaltungen parallel zueinander geschaltet sind, und in jeder Halbbrückenschaltung die magnetoresistiven Elemente (An-Hn) des einen Brückenzweiges gegenüber den magnetoresistiven Elementen (An-Hn) des anderen Brükkenzweiges um den Betrag t/2 versetzt sind.

2. Positionsmeßeinrichtung zur Messung der Relativlage zweier zueinander beweglicher Objekte (2, 2a, 2b; 4, 4a, 4b) bei der eine periodische Meßteilung (3, 3a, 3b) in Meßrichtung (X) von einer Abtasteinheit (5, 5a, 5b) mittels magnetoresistiver Elemente (An-Hn) zur Erzeugung von positionsabhängigen Ausgangssignalen (S1, S2) abgetastet wird, aus denen in einer Auswerteeinrichtung Positionsmeßwerte gebildet werden, wobei die magnetoresistiven Elemente (An-Hn) zu Brükkenschaltungen (H1, H2, V1, V2) verschaltet sind, indem jeweils ein Brückenzweig aus einer Reihenschaltung von mehreren magnetoresistiven Elementen (An-Hn) besteht, dadurch gekennzeichnet, daß die Abtasteinheit (5) wenigstens vier Gruppen (A-H) von magnetoresistiven Elementen (An-Hn) aufweist, und sich jede Gruppe (A-H) aus mindestens vier voneinander gleichbeabstandeten magnetoresistiven Elementen (An-Hn) über eine Teilungsperiode (t) der Meßteilung (3) erstreckt, und daß die Brückenschaltungen als Vollbrückenschaltungen (V1, V2) ausgebildet sind, wobei innerhalb eines Brückenzweiges mehrere magnetoresistive Elemente (An-Hn) in Reihe geschaltet sind und diese Reihenschaltungen parallel zueinander geschaltet sind, und die magnetoresistiven Elemente (An-Hn) eines Brückenzweiges gegenüber den magnetoresistiven Elementen (An-Hn) eines damit direkt verbundenen Brückenzweiges um den Betrag t/2 versetzt sind.

3. Meßeinrichtung nach einem der Ansprüche 1 oder 2, dadurch gekennzeichnet, daß bei vier magnetoresistiven Elementen (An-Dn) jeder Gruppe (A-D) ihr jeweiliger gegenseitiger Abstand t/4 beträgt.

4. Meßeinrichtung nach einem der Ansprüche 1 bis 3, dadurch gekennzeichnet, daß die periodische Meßteilung (3) in Meßrichtung (X) alternierend gegenpolig magnetisierte Bereiche (NS) aufweist.

5. Meßeinrichtung nach einen der Ansprüche 1 bis 3, dadurch gekennzeichnet, daß die periodische Meßteilung (3a) in Meßrichtung (X) alternierend magnetisch gut leitende Bereiche und magnetisch schlecht leitende Bereiche besitzt und daß die Abtasteinheit (5a) einen Permanentmagneten (PM) aufweist.

6. Meßeinrichtung nach einem der Ansprüche 1 bis 3, dadurch gekennzeichnet, daß die periodische Meßteilung (3a) aus magnetisch leitendem Material in Meßrichtung (X) alternierend aufeinanderfolgende Stege (S) und Vertiefungen (V) besitzt.

7. Meßeinrichtung nach einem der Ansprüche 1 bis 3, dadurch gekennzeichnet, daß die periodische Meßteilung (3b) in Meßrichtung (X) alternierend entgegengesetzt stromdurchflossene Leiter (L) aufweist, die senkrecht zur Meßrichtung (X) und parallel zueinander verlaufen.

8. Meßeinrichtung nach einem der Ansprüche 1 bis 7, dadurch gekennzeichnet, daß die Auswerteeinrichtung eine Interpolationseinheit aufweist.

## Claims

1. Position-measuring device for measuring the relative position of two objects (2, 2a, 2b; 4, 4a, 4b) which are movable with respect to one another, in which a periodic measurement scale (3, 3a, 3b) is scanned in the measurement direction (X) by a scanner unit (5, 5a, 5b) by means of magnetoresistive elements (An-Hn) in order to generate position-dependent output signals (S1, S2) from which position measurement values are formed in an evaluation device, the magnetoresistive elements (An-Hn) being incorporated in bridge circuits H1, H2, V1, V2), one bridge branch in each case comprising a series circuit of a plurality of magnetoresistive elements (An-Hn), characterised in that the scanner unit (5) has at least four groups (A-H) of magnetoresistive elements (An-Hn), and each group (A-H) of at least four equally-spaced magnetoresistive elements (An-Hn) extends over a scale period (t) of the measurement scale (3), and in that the bridge circuits are formed as half-bridge circuits (H1, H2), a plurality of magnetoresistive elements (An-Hn)being incorporated in series within a bridge branch, these series circuits being incorporated parallel to one another, and, in each half-bridge circuit, the magnetoresistive elements (An-Hn) of one bridge branch are offset relative to the magnetoresistive elements (An-Hn) of the other bridge branch by the quantity t/2.

2. Position-measuring device for measuring the relative position of two objects (2, 2a, 2b; 4, 4a, 4b) which are movable with respect to one another, in which a periodic measurement scale (3, 3a, 3b) is scanned in the measurement direction (X) by a scanner unit (5, 5a, 5b) by means of magnetoresistive elements (An-Hn) in order to generate position-dependent output signals (S1, S2) from which position measurement values are formed in an evaluation device, the magnetoresistive elements (An-Hn) being incorporated in bridge circuits H1, H2, V1, V2), one bridge branch in each case comprising a series circuit of a plurality of magnetoresistive elements (An-Hn), characterised in that the scanner unit (5) has at least four groups (A-H) of magnetoresistive elements (An-Hn), and each group (A-H) of at least four equally-spaced magnetoresistive elements (An-Hn) extends over a scale period (t) of the measurement scale (3), and in that the bridge circuits are formed as whole-bridge circuits (V1, V2), a plurality of magnetoresistive elements (An-Hn)being incorporated in series within a bridge branch, these series circuits being incorporated parallel to one another, and the magnetoresistive elements (An-Hn) of a bridge branch are offset relative to the magnetoresistive elements (An-Hn) of a bridge branch directly connected thereto by the quantity t/2.

3. Measuring device according to one of claims 1 or 2, characterised in that when there are four magnetoresistive elements (An-Dn) in each group (A-D), their respective mutual spacing is t/4.

4. Measuring device according to one of claims 1 to 3, characterised in that the periodic measurement scale (3) has, in the measurement direction (X), regions (NS) which are magnetised with alternately opposite polarity.

5. Measuring device according to one of claims 1 to 3, characterised in that the periodic measurement scale (3) has, in the measurement direction (X), alternate regions with good conductivity and regions with poor conductivity, and in that the scanner unit (5a) has a permanent magnet (PM).

6. Measuring device according to one of claims 1 to 3, characterised in that the periodic measurement scale (3a), made of magnetically conductive material, has, in the measurement direction (X), alternately-succeeding webs (S) and recesses (V).

7. Measuring device according to one of claims 1 to 3, characterised in that the periodic measurement scale (3) has, in the measurement direction (X), alternating conductors (L) through which current flows in opposite directions, and which extend vertically to the measurement direction (X) and parallel to one another.

8. Measuring device according to one of claims 1 to 7, characterised in that the evaluation unit has an interpolating unit.

## Revendications

1. Dispositif de mesure de position pour mesurer la position relative de deux objets (2, 2a, 2b; 4, 4a, 4b) mobiles l'un par rapport à l'autre, dans lequel une graduation de mesure (3, 3a, 3b) périodique est palpée dans la direction de mesure (X) par une unité de palpage (5, 5a, 5b), à l'aide d'éléments magnétorésistifs (An-Hn), aux fins de produire des signaux de sortie (S1, S2) dépendants de la position à partir desquels des valeurs de mesure de position sont formées dans un dispositif de traitement, les éléments magnétorésistifs (An-Hn) étant connectés en ponts (H1, H2, V1, V2), chaque branche de pont étant formée d'un montage série de plusieurs éléments magnétorésistifs (An-Hn), caractérisé en ce que l'unité de palpage (5) comporte au moins quatre groupes (A-H) d'éléments magnétorésistifs (An-Hn) et que chaque groupe (A-H) formé d'au moins quatre éléments magnétorésistifs (An-Hn) régulièrement espacés s'étend sur une période de graduation (t) de la graduation de mesure (3) et en ce que les montage en ponts sont agencés sous formes de montages demi-pont (H1, H2), plusieurs éléments magnétorésistifs (An-Hn) étant connectés en série à l'intérieur d'une branche de pont et ces montages série étant connectés en parallèle les uns avec les autres et, dans chaque montage demi-pont, les éléments magnétorésistifs (An-Hn) d'une branche de pont étant décalés de la valeur t/2 par rapport aux éléments magnétorésistifs (An-Hn) de l'autre branche de pont.

2. Dispositif de mesure de position pour mesurer la position relative de deux objets (2, 2a, 2b; 4, 4a, 4b) mobiles l'un par rapport à l'autre, dans lequel une graduation de mesure (3, 3a, 3b) périodique est palpée dans la direction de mesure (X) par une unité de palpage (5, 5a, 5b), à l'aide d'éléments magnétorésistifs (An-Hn), aux fins de produire des signaux de sortie (S1, S2) dépendants de la position à partir desquels des valeurs de mesure de position sont formées dans un dispositif de traitement, les éléments magnétorésistifs (An-Hn) étant connectés en ponts (H1, H2, V1, V2), chaque branche de pont étant formée d'un montage série de plusieurs éléments magnétorésistifs (An-Hn), caractérisé en ce que l'unité de palpage (5) comporte au moins quatre groupes (A-H) d'éléments magnétorésistifs (An-Hn) et que chaque groupe (A-H) formé d'au moins quatre éléments magnétorésistifs (An-Hn) régulièrement espacés s'étend sur une période de graduation (t) de la graduation de mesure (3) et en ce que les montage en ponts sont agencés sous formes de montages en pont intégral (V1, V2), plusieurs éléments magnétorésistifs (An-Hn) étant connectés en série à l'intérieur d'une branche de pont et ces montages série étant connectés en parallèle les uns avec les autres et les éléments magnétorésistifs (An-Hn) d'une branche de pont étant décalés de la valeur t/2 par rapport aux éléments magnétorésistifs (An-Hn) d'une branche de pont connectée directement à celle-ci.

3. Dispositif de mesure selon l'une des revendications 1 ou 2, caractérisé en ce que dans le cas de quatre éléments magnétorésistifs (An-Hn) par groupe (A-D), l'espacement entre ceux-ci est t/4.

4. Dispositif de mesure selon l'une des revendications 1 à 3, caractérisé en ce que la graduation de mesure (3) périodique présente des zones (NS) magnétisées en opposition qui sont disposées en alternance dans la direction de mesure (X).

5. Dispositif de mesure selon l'une des revendications 1 à 3, caractérisé en ce que la graduation de mesure (3a) périodique présente des zones à bonne perméabilité magnétique et des zones à mauvaise perméabilité magnétique qui sont disposées en alternance dans la direction de mesure (X) et en ce que l'unité de palpage (5a) comporte un aimant permanent (PM).

6. Dispositif de mesure selon l'une des revendications 1 à 3, caractérisé en ce que la graduation de mesure (3a) périodique en matériau magnétiquement perméable comporte des barrettes (S) et des creux (V) qui se succèdent en alternance dans la direction de mesure (X).

7. Dispositif de mesure selon l'une des revendications 1 à 3, caractérisé en ce que la graduation de mesure (3b) périodique présente des conducteurs (L) parcourus en sens inverse par le courant qui sont disposés en alternance dans la direction de mesure (X) et s'étendent perpendiculairement à la direction de mesure (X) et parallèlement les uns aux autres.

8. Dispositif de mesure selon l'une des revendications 1 à 7, caractérisé en ce que le dispositif de traitement comporte une unité d'interpolation.
